# EUROPÄISCHE PATENTSCHRIFT

(11) **EP 2 183 561 B1**
(45) Veröffentlichungstag und Bekanntmachung des Hinweises auf die Patenterteilung: **12.06.2019**
(21) Anmeldenummer: 08786021.9
(22) Anmeldetag: 10.07.2008
(51) Int. Cl.: G01K 7/18

(54) **VORRICHTUNG ZUR BESTIMMUNG UND/ODER ÜBERWACHUNG EINER PROZESSGRÖSSE**
DEVICE FOR DETERMINING AND/OR MONITORING A PROCESS PARAMETER
DISPOSITIF DESTINÉ À LA DÉTERMINATION ET/OU AU CONTRÔLE D'UNE GRANDEUR DE PROCESSUS

(30) Priorität: 30.07.2007 DE 102007035997
(43) Veröffentlichungstag der Anmeldung: 12.05.2010
(73) Patentinhaber: Innovative Sensor Technology IST AG, 9642 Ebnat-Kappel (CH)
(72) Erfinder: POLAK, Jiri, CH-9652 Neu St. Johann (CH)
(74) Vertreter: Andres, Angelika Maria
(86) Internationale Anmeldenummer: PCT/EP2008/058964
(87) Internationale Veröffentlichungsnummer: WO 2009/016013

(56) Entgegenhaltungen:
- EP-A- 0 905 494
- EP-A- 1 431 718
- WO-A-92/15101
- US-A- 5 202 665
- US-A- 5 300 916
- US-A- 5 610 572

## Beschreibung

Die Erfindung bezieht sich auf eine Vorrichtung zur Bestimmung und/oder Überwachung mindestens einer Prozessgröße, mit mindestens einem Substrat, welches aus einem Substratmaterial besteht, mit mindestens einer sensitiven Schicht, welche auf dem Substrat aufgebracht ist und welche mindestens eine von der Prozessgröße und/oder von einer Änderung der Prozessgröße abhängige Messgröße erzeugt, und mit mindestens einer Passivierungsschicht, welche auf der sensitiven Schicht aufgebracht ist. Bei der Prozessgröße handelt es sich beispielsweise um die Temperatur oder die Strömung eines Mediums.

Im Stand der Technik ist es beispielsweise bekannt, die Temperatur über die Auswertung des elektrischen Widerstands eines Widerstandselements zu bestimmen bzw. zu überwachen. Die Widerstandselemente werden dabei beispielsweise über Dünnschichttechniken oder Dickschichttechniken auf einem Substrat aufgebracht. Um Korrosion, mechanische Beschädigung oder den Verlust eines Teiles der aktiven/sensitiven Schicht, z.B. durch Verdampfen zu vermeiden, wird meist ein Überzug in Form einer Passivierungsschicht aufgebracht. Die entsprechend für die Messung sensitive Schicht und das Substrat und weitere Schichten bilden dann den eigentlichen Messsensor.

US5610572 offenbart eine Vorrichtung zur Bestimmung einer Prozessgröße mit einem AI203 Substrat, einem Platin-Sensor, zwei Passivierungsschichten und einer Schutzschicht. In US5610572 bestehen die Passivierungsschichten aus einem Glasssystem CaO, BaO, CaO-Al2O3 oder CaO-BaO-Al2O3.

WO92/15101, EP0905494, EP1431718, US5202665 und US5300916 offenbaren weiteren Beispiele von bekannten Vorrichtungen zur Bestimmung einer Prozessgröße.

Problematisch ist, dass im Bereich der Temperaturmesstechnik vermehrt die Anwendbarkeit bei höheren Temperaturen bis zu 1000°C und darüber hinaus gefordert wird. Beispiele für solche Anwendungen sind Brennvorgänge in konventionellen Brennern oder auch Temperaturmessungen in Motoren von Autos. Der Sensor muss dabei extreme Bedingungen aushalten. Da die Schichten ggf. unterschiedliche Ausdehnungskoeffizienten aufweisen, erzeugen hohe Temperaturen mechanische Spannungen in den Schichten, welche z.B. Risse in den einzelnen Schichten hervorrufen können. Dies kann zum Totalausfall führen oder der Widerstandswert bzw. der Temperaturkoeffizient (TCR-Wert) des Sensorelements wird wesentlich verändert.

Der Erfindung liegt die Aufgabe zugrunde, einen Sensor vorzuschlagen, welcher bei hohen Temperaturen anwendbar ist.

Die Aufgabe wird erfindungsgemäß durch eine Vorrichtung gemäß Anspruch 1 gelöst.

Erfindungsgemäß besteht die Passivierungsschicht zumindest anteilig aus dem Substratmaterial. Durch diese Abstimmung der Materialien aufeinander wird eine Anpassung der Ausdehnungskoeffizienten erzielt.

Erfindungsgemäß handelt es sich bei dem Substrat um Al₂O₃, auf welcher Platin oder zumindest teilweise Platin als sensitive Schicht aufgebracht wird. Um mechanische Spannung zwischen den Schichten zu verringern und um auch der Gefahr einer Beschädigung des aktiven Sensormäanders zu begegnen, wird eine Passivierung in Form einer Schicht aufgebracht.

In einer Ausgestaltung ist das Material der Passivierungsschicht identisch mit dem des Substrats, d.h. die Passivierungsschicht besteht im Wesentlichen vollständig aus dem Substratmaterial.

In einigen Ausgestaltungen kann es vorkommen, dass das Substratmaterial eine solche Einbrenntemperatur, durch welche das Material der Passivierungsschicht in eine kompakte Glasschmelze umgewandelt wird, aufweist, dass die bereits bestehende Struktur aus Substrat und sensitiver Schicht für die Erzeugung einer solchen Passivierungsschicht aus dem Substratmaterial nicht dieser Temperatur ausgesetzt werden sollten, da es sonst zu Veränderungen bzw. zu Beschädigungen der sensitiven Schicht bzw. des Substrats selbst kommen kann. Für die Erzeugung einer Schicht aus Al₂O₃ ist für die Erzeugung einer Passivierung aus diesem Material beispielsweise eine Temperatur größer als 1600°C erforderlich. Daher ist es in einigen Ausgestaltungen vorteilhaft, wenn die Passivierung nur teilweise aus dem Substratmaterial besteht.

Die Passivierung dient u.a. dem mechanischen Schutz bzw. dem Schutz vor chemischen Einflüssen. Weiterhin schützt die Passivierung vor dem Ausdampfen der sensitiven bzw. für die Messung aktiven Schicht.

Vorteilhafterweise handelt es sich bei der Passivierung um ein dicht verschlossenes "Glas".

Eine Ausgestaltung der Erfindung sieht vor, dass die Passivierungsschicht zumindest zu ungefähr 10% aus dem Substratmaterial besteht.

Eine Ausgestaltung der Erfindung sieht vor, dass die Passivierungsschicht zu ungefähr 40% aus dem Substratmaterial besteht.

Eine Ausgestaltung der Erfindung beinhaltet, dass die Passivierungsschicht zwischen ungefähr 10% und ungefähr 90% aus dem Substratmaterial besteht. In einer Ausgestaltung besteht die Passivierungsschicht zwischen 40% und 90% aus dem Substratmaterial

Eine Ausgestaltung beinhaltet, dass es sich bei der Passivierungsschicht im Wesentlichen um ein eutektisches Glassystem handelt. Die Passivierungsschicht hat somit eine Glasähnliche Struktur und ist in dieser Ausgestaltung eutektisch.

Eine Ausgestaltung sieht vor, dass die Passivierungsschicht eine Schmelztemperatur zwischen ungefähr 1200°C und ungefähr 1500°C aufweist.

Eine Ausgestaltung beinhaltet, dass die Passivierungsschicht eine Schmelztemperatur zwischen ungefähr 1200°C und ungefähr 1400°C aufweist. D.h. die Zusammensetzung der Passivierungsschicht wird derartig erzeugt, dass die Schmelztemperatur zwischen den angegebenen Grenzen liegt.

Erfindungsgemäß besteht das Substrat im Wesentlichen aus Al₂O₃.

Erfindungsgemäß besteht die Passivierungsschicht zumindest teilweise aus einem Glas und/oder aus einem Glassystem.

Erfindungsgemäß besteht die Passivierungsschicht zumindest anteilig aus einem Glas und/oder einer Schmelze aus einem System Al₂O₃-CaO-SrO.

Eine Ausgestaltung der Erfindung beinhaltet, dass die Passivierungsschicht zumindest zu ungefähr 10% aus Al₂O₃ besteht, und dass die Passivierungsschicht zumindest zu ungefähr 10% aus CaO besteht.

Eine Ausgestaltung der Erfindung sieht vor, dass die Passivierungsschicht zu einem ungefähr gleichen Anteil aus Al₂O₃ und aus CaO besteht. In dieser Ausgestaltung besteht die Passivierungsschicht also im Wesentlichen aus einem gleichen Anteil an Al₂O₃ wie an CaO, wobei auch andere Substanzen Bestandteil der Schicht sein können.

Eine Ausgestaltung der Erfindung beinhaltet, dass die Passivierungsschicht zu einem höheren Anteil aus Al₂O₃ als aus CaO besteht. Der Anteil kann dabei auch nur leicht oder gering größer sein.

Eine Ausgestaltung der Erfindung sieht vor, dass die Passivierungsschicht zwischen ungefähr 30% und 50% aus Al₂O₃ besteht, und dass die Passivierungsschicht zwischen ungefähr 30% und 50% aus CaO besteht.

Eine Ausgestaltung der Erfindung beinhaltet, dass die Passivierungsschicht zu ungefähr 40% aus Al₂O₃ besteht, und dass die Passivierungsschicht zu ungefähr 40% aus CaO besteht.

Oberhalb der sensitiven Schicht und somit auf der vom Substrat abgewandten Seite der sensitiven Schicht befindet sich somit zumindest eine (erste) Passivierung, welche in einer Ausgestaltung aus einem Gemisch aus Alpha-Al₂O₃ mit einem Anteil zwischen 10 und 90% und aus einem Glas und/oder einer Schmelze aus einem System von z.B. Al₂O₃ -CaO-SrO besteht.

Durch den hohen Gehalt an dem Substratmaterial - in diesem Beispiel an Al₂O₃ - im Gemisch ergibt sich eine Anpassung der Ausdehnungskoeffizienten. Durch die Beigabe eines o.g. Glases bzw. einer Schmelze ist gleichzeitig die Einbrenntemperatur reduziert, in diesem Beispiel für das Substratmaterial auf eine Temperatur zwischen ungefähr 1200°C und 1500°C. Nach dem Einbrennen ist eine solche Schicht temperaturresistent.

Eine Ausgestaltung der Erfindung sieht vor, dass mindestens eine zweite Passivierungsschicht vorgesehen ist, welche auf der Passivierungsschicht aufgebracht ist. Bei der Aufbringung einer zweiten Passivierungsschicht lässt sich somit die oben diskutierte Passivierungsschicht auch als erste Passivierungsschicht bezeichnen.

Eine Ausgestaltung der Erfindung beinhaltet, dass die Passivierungsschicht und die zweite Passivierungsschicht im Wesentlichen aus dem gleichen Material bestehen. D.h. die somit erste und die zweite Passivierungsschicht haben im Wesentlichen die gleiche Zusammensetzung.

Eine Ausgestaltung der Erfindung sieht vor, dass es sich bei der zweiten Passivierungsschicht im Wesentlichen um ein Glassystem handelt.

Eine Ausgestaltung der Erfindung beinhaltet, dass das Glassystem der zweiten Passivierungsschicht auf der Basis von SiO₂, CaO, BaO, Al₂O₃ oder MgO besteht.

Die Unzulänglichkeiten bei einigen Verfahren zur Aufbringung der Passivierungsschicht werden somit dadurch kompensiert, dass eine zweite Passivierungsschicht oberhalb der (damit ersten) Passivierungsschicht aufgebracht wird. Die Passivierung wird erfindungsgemäß mit Siebdrucktechniken aufgebracht, so dass man bei der ersten Schicht mit prozessbedingten "Löchern" rechnen muss. Deshalb wird der erste Passivierungsschritt wiederholt, indem eine zweite Passivierungsschicht aufgebracht wird.

Für den Schutz der sensitiven Schicht, wie z.B. des Platin-Mäanders auf dem Substrat ist es entscheidend, dass in der Passivierung kein Riss oder kein Loch vorhanden ist. Unter einem Loch verdampft das Material (z.B. das Platin) der sensitiven Schicht, wodurch sich ein Loch in der Struktur, z.B. dem Mäander der aktiven/sensitiven Schicht ergibt. Damit steigt der elektrische Widerstand bzw. es kann zu einer Unterbrechung der Leitung kommen.

Erfindungsgemäß ist mindestens eine Schutzschicht vorgesehen,
welche auf der Passivierungsschicht aufgebracht ist.

Eine Ausgestaltung der Erfindung beinhaltet, dass die Schutzschicht derartig ausgestaltet ist, dass sie wasserbeständig und/oder wasserdampfbeständig ist. Bei der Schutzschicht handelt es sich somit um eine Wasser- bzw. Wasserdampfschutzschicht. In einer weiteren Ausgestaltung ist die Schutzschicht auch säurebeständig.

Eine Ausgestaltung sieht vor, dass die Schutzschicht aus einem Glas und/oder einem Glassystem auf der Basis von SiO₂, CaO, BaO, Al₂O₃ oder MgO besteht. Besonders bevorzugt ist hier ein SiO₂-und CaO-Glassystem zu nennen, welchem geringe Mengen von Al₂O₃ beigemischt sind. Letzteres dient der Anpassung der Ausdehnungskoeffizienten an das darunter liegende Glassystem.

Die erste Passivierungsschicht bzw. die zweite Passivierungsschicht ist nach dem Einbrennen zwar temperaturresistent, aber infolge der Zusammensetzung nicht wasser- bzw. wasserdampfresistent. Daher ist die Schutzschicht erforderlich, welche wasserbeständig ist und welche vorzugsweise aus einem Glassystem auf der Basis von SiO₂, CaO, BaO, Al₂O₃ oder MgO besteht.

Sind insgesamt zwei Passivierungsschichten vorgesehen, welche mechanische Spannungen aufgrund von unterschiedlichen Ausdehnungskoeffizienten ausgleichen sollen, und ist eine weitere Schutzschicht vorgesehen, welche verhindert, dass Wasser bzw. Wasserdampf zu der unter der Schutzschicht liegenden Passivierungsschicht gelangt, so besteht die Passivierung insgesamt aus drei Schichten. Oder mit anderen Worten: Die Passivierung wird durch die Auftragung von drei Schichten erzeugt, um die gewünschten Eigenschaften zu erreichen.

Der Schutz gegen Wasser bzw. Wasserdampf ist erforderlich, da eine wie oben diskutierte Hochtemperatur-Passivierung nicht wasser- bzw. säurebeständig ist. Das Wasser zersetzt die Matrix des Glassystems bis es zerfällt.

Eine Ausgestaltung der Erfindung sieht vor, dass es sich bei der Prozessgröße um die Temperatur handelt. Die Messung der Temperatur dient beispielsweise auch der Messung der Strömung bzw. des Durchflusses eines Mediums, indem die Abkühlung eines Heizelements durch das fließende Medium ausgewertet wird.

Erfindungsgemäß besteht die sensitive Schicht zumindest teilweise aus Platin.

Eine Ausgestaltung der Erfindung sieht vor, dass die sensitive Schicht mit einem Dünnschichtverfahren oder mit einem Dickschichtverfahren erzeugt ist.

Die Erfindung wird anhand der nachfolgenden Zeichnung näher erläutert. Es zeigt:

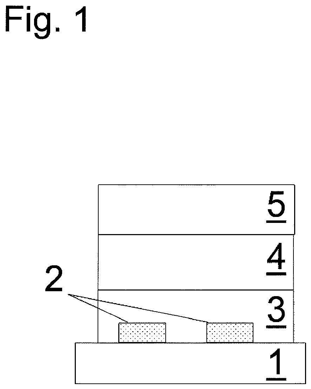

Fig. 1: einen Schnitt durch eine schematische Darstellung eines erfindungsgemäßen Sensors.

Die Fig. 1 zeigt den wesentlichen Schichtaufbau eines erfindungsgemäßen Sensors. Der Sensor dient dabei beispielsweise der Bestimmung und/oder Überwachung der Temperatur und ist beispielsweise Bestandteil eines Messgerätes. In einer weiteren Anwendung wird der Sensor beispielsweise in einem Motor eines Fahrzeugs eingesetzt. Die elektrische Kontaktierung des Sensors zur Erzeugung bzw. zum Abgriff von elektrischen Signalen und die mechanische Befestigung etc. sind hier nicht dargestellt.

Auf einem Substrat 1 - in einer Ausgestaltung zu 99.6% bestehend aus Al ₂O₃ und anteilig aus SiO₂, CaO, BaO oder MgO - ist eine sensitive bzw. für die Messung aktive Schicht 2 z.B. mit einem Dickschichtverfahren oder mit einem Dünnschichtverfahren, wie z.B. mit Sputtern oder Aufdampfen aufgebracht. Bei der sensitiven Schicht 2 handelt es sich hier beispielsweise um einen elektrischen Widerstand, dessen Widerstandswert von der Temperatur abhängig ist. Somit erlaubt bei Kenntnis über die entsprechende Kennlinie die Messung des elektrischen Widerstands die Messung bzw. Überwachung der Temperatur. Die sensitive Schicht 2 besteht beispielsweise im Wesentlichen aus Platin, welches in einer Mäanderstruktur auf dem Substrat 1 aufgebracht worden ist. Der Mäander wird passend kontaktiert, um den elektrischen Widerstand auszumessen.

Oberhalb der sensitiven Schicht 2 und hier auch zwischen der Struktur der sensitiven Schicht 2 und somit im Wesentlichen auf der vom Substrat 1 abgewandten Seite der sensitiven Schicht 2 befindet sich eine erste Passivierungsschicht 3. Eine solche Schicht weißt einen an das Substratmaterial angepassten Ausdehnungskoeffizienten auf, so dass die mechanischen Spannungen, welche beispielsweise zwischen dem Substrat 1 und der sensitiven Schicht 2 aufgrund unterschiedlicher Ausdehnungskoeffizienten beim Vorliegen von hohen Temperaturen bzw. Temperaturzyklen auftreten, ausgeglichen sind.

Erfindungsgemäß besteht die erste Passivierungsschicht 3 zumindest teilweise aus dem Material, aus welchem das Substrat 1 besteht. Vorzugsweise liegt der Anteil zwischen 10% und 90%. Handelt es sich bei dem Substratmaterial beispielsweise um Al₂O₃, so besteht auch die erste Passivierungsschicht 3 zwischen 10% und 90% aus Al₂O₃. Erfindungsgemäß besteht die erste Passivierungsschicht zumindest teilweise aus einem Glas und/oder einer Schmelze aus einem System Al₂ O₃-CaO-SrO.

Ein Verfahren zum Aufbringen einer solchen Passivierungsschicht besteht im Siebdruckverfahren. Ggf. kann es daher vorkommen, dass das Verfahren "Löcher" in der Passivierung hinterlässt. Um dem zu begegnen, wird auf der ersten Passivierungsschicht 3 eine zweite Passivierungsschicht 4 aufgebracht. Die zweite Passivierungsschicht 4 befindet sich somit auf der vom Substrat 1 abgewandten Seite der ersten Passivierungsschicht 3 bzw. auf der von der sensitiven Schicht 2 abgewandten Seite der ersten Passivierungsschicht 3. Eine solche zweite Schicht ist nicht erforderlich, wenn das Verfahren zur Erzeugung der ersten Schicht bereits ausreichend Ergebnisse liefert.

In einer Ausgestaltung besteht die zweite Passivierungsschicht 4 aus dem gleichen Material wie die erste Passivierungsschicht 3. In weiteren alternativen oder ergänzenden Ausgestaltungen besteht die zweite Passivierungsschicht 4 aus einem Glassystem auf der Basis von SiO₂ oder CaO oder BaO oder Al₂O₃ oder MgO.

Oberhalb der zweiten Passivierungsschicht 4 befindet sich hier eine weitere Schutzschicht 5. Alternativ ist die Schutzschicht 5 direkt auf der ersten Passivierungsschicht 3 in dem Fall aufgebracht, dass keine zweite Passivierungsschicht 4 vorgesehen oder notwendig ist. Die Schutzschicht 5 ist derartig ausgestaltet, dass sie wasserbeständig ist, also verhindert, dass Wasser zu der darunter befindlichen Passivierungsschicht gelangt.

Die hier dargestellte und konzipierte Passivierung eines Sensorelements verhindert bzw. reduziert mechanische Spannungen, welche Folge unterschiedlicher Ausdehnungskoeffizienten sind. Weiterhin schützt sie vor dem Eindringen von Wasser bzw. Wasserdampf. Diese beiden Funktionen werden dabei auf die Passivierungsschicht bzw. die Passivierungsschichten und die Schutzschicht verteilt.

### Bezugszeichenliste

**Tabelle 1**

| | |
|---|---|
| 1 | Substrat |
| 2 | Sensitive Schicht |
| 3 | Erste Passivierungsschicht |
| 4 | Zweite Passivierungsschicht |
| 5 | Schutzschicht |

## Patentansprüche

1. Vorrichtung zur Bestimmung und/oder Überwachung mindestens einer Prozessgröße,
mit mindestens einem Substrat (1), welches im Wesentlichen aus Al2O3 besteht,
mit mindestens einer sensitiven Schicht (2), welche zumindest teilweise aus Platin besteht, welche auf dem Substrat (1) aufgebracht ist und welche mindestens eine von der Prozessgröße und/oder von einer Änderung der Prozessgröße abhängige Messgröße erzeugt,
und
mit mindestens einer Passivierungsschicht (3), welche auf der sensitiven Schicht aufgebracht ist,
wobei die Passivierungsschicht zumindest anteilig aus dem Substratmatieral besteht,
wobei mindestens eine Schutzschicht (5) vorgesehen ist, welche auf der Passivierungsschicht (3) aufgebracht ist,
**dadurch gekennzeichnet,**
**dass** die Passivierungsschicht (3) im Siebdruckverfahren aufgebracht ist, und dass die Passivierungsschicht (3) zumindest anteilig aus einem Glas aus einem System Al2O3-CaO-SrO und/oder einer Schmelze aus einem System Al₂O₃-CaO-SrO besteht.

2. Vorrichtung nach Anspruch 1,
**dadurch gekennzeichnet,**
**dass** es sich bei der Passivierungsschicht (3) im Wesentlichen um ein eutektisches Glassystem handelt.

3. Vorrichtung nach Anspruch 1 oder 2,
**dadurch gekennzeichnet,**
**dass** die Passivierungsschicht (3) zumindest teilweise aus Alpha-Al₂O₃ besteht.

4. Vorrichtung nach mindestens einem der Ansprüche 1 bis 3,
**dadurch gekennzeichnet,**
**dass** die Passivierungsschicht (3) zu einem höheren Anteil aus Al₂O₃ als aus CaO besteht.

5. Vorrichtung nach Anspruch 1 ,
**dadurch gekennzeichnet,**
**dass** mindestens eine zweite Passivierungsschicht (4) vorgesehen ist, welche auf der Passivierungsschicht (3) aufgebracht ist,
**dass** die Passivierungsschicht (3) und die zweite Passivierungsschicht (4) im Wesentlichen aus dem gleichen Material bestehen.

6. Vorrichtung nach Anspruch 1,
**dadurch gekennzeichnet,**
**dass** die Schutzschicht (5) derartig ausgestaltet ist, dass sie wasserbeständig und/oder wasserdampfbeständig ist.

7. Vorrichtung nach Anspruch 1 oder 6,
**dadurch gekennzeichnet,**
**dass** die Schutzschicht (5) aus einem Glas und/oder einem Glassystem auf der Basis von SiO₂, CaO, BaO, Al₂O₃ oder MgO besteht.

8. Vorrichtung nach mindestens einem der Ansprüche 1 bis 7,
**dadurch gekennzeichnet,**
**dass** die sensitive Schicht (2) mit einem Dünnschichtverfahren oder mit einem Dickschichtverfahren erzeugt ist.

## Claims

1. Apparatus for determining and/or monitoring at least one process variable, with at least a substrate (1), which is essentially made from Al2O3,
with at least one sensitive layer (2), which is at least partially made from platinum, and which is applied to the substrate (1) and which generates at least one measured variable that depends on the process variable and/or on a change in the process variable,
and
with at least a passivation layer (3), which is applied to the sensitive layer, wherein the passivation layer consists at least in part of the substrate material, wherein at least a protection layer (5) is provided which is applied to the passivation layer (3),
**characterized in that**
the passivation layer (3) is applied using the screen printing process, and **in that** the passivation layer (3) is made at least partially from a glass from an Al₂O₃-CaO-SrO system or a melt from an Al₂O₃-CaO-SrO system.

2. Apparatus as claimed in Claim 1,
**characterized in that**
the passivation layer (3) is essentially a eutectic glass system.

3. Apparatus as claimed in Claim 1 or 2,
**characterized in that**
the passivation layer (3) is made at least partially from alpha-Al₂O₃.

4. Apparatus as claimed in at least one of the Claims 1 to 3,
**characterized in that**
the passivation layer (3) consists of an Al₂O₃ part which is greater than the CaO part.

5. Apparatus as claimed in Claim 1,
**characterized in that**
at least a second passivation layer (4) is provided, which is applied to the passivation layer (3),
and **in that** the passivation layer (3) and the second passivation layer (4) are essentially made from the same material.

6. Apparatus as claimed in Claim 1,
**characterized in that**
the protection layer (5) is designed in such a way that it is resistant to water and/or resistant to steam.

7. Apparatus as claimed in Claim 1 or 6,
**characterized in that**
the protection layer (5) is made from a glass and/or a glass system based on SiO₂, CaO, BaO, Al₂O₃ or MgO.

8. Apparatus as claimed in Claim 1 to 7,
**characterized in that**
the sensitive layer (2) is produced using a thin-film process or a thick-film process.

## Revendications

1. Dispositif destiné à la détermination et/ou la surveillance d'au moins une grandeur process,
avec au moins un substrat (1), qui se compose pour l'essentiel d'Al2O3,
avec au moins une couche sensible (2), laquelle est au moins partiellement constituée de platine, laquelle est appliquée sur le substrat (1) et laquelle génère au moins une grandeur de mesure dépendant de la grandeur de process et/ou d'un changement de la grandeur de process,
et
avec au moins une couche de passivation (3),, laquelle est appliquée sur la couche sensible,
la couche de passivation étant constituée au moins partiellement d'un matériau de substrat,
au moins une couche de protection (5) étant prévue, laquelle est appliquée sur la couche de passivation (3),
**caractérisé**
**en ce que** la couche de passivation (3) est appliquée avec le procédé de sérigraphie, et
**en ce que** la couche de passivation (3) est constituée au moins partiellement d'un système Al₂O₃-CaO-SrO et/ou d'une matière fondue constituée d'un système Al₂O₃-CaO-SrO.

2. Dispositif selon la revendication 1,
**caractérisé**
**en ce qu'**il s'agit, concernant la couche de passivation (3), pour l'essentiel d'un système en verre eutectique.

3. Dispositif selon la revendication 1 ou 2,
**caractérisé**
en ce la couche de passivation (3) est constituée au moins partiellement d'Alpha-Al₂O₃.

4. Dispositif selon l'une des revendications 1 à 3,
**caractérisé**
**en ce que** la couche de passivation (3) est constituée d'une part d'Al₂O₃ supérieure à la part de CaO.

5. Dispositif selon la revendication 1,
**caractérisé**
**en ce qu'**est prévue au moins une deuxième couche de passivation (4), laquelle est appliquée sur la couche de passivation (3).

6. Dispositif selon la revendication 1,
**caractérisé**
en ce la couche de protection (5) est conçue de telle sorte à être résistante à l'eau et/ou résistante à la vapeur d'eau.

7. Dispositif selon la revendication 1 ou 6,
**caractérisé**
en ce la couche de protection (5) est constituée d'un verre et/ou d'un système en verre sur la base de SiO₂, CaO, BaO, Al₂O₃ ou MgO.

8. Dispositif selon l'une des revendications 1 à 7,
**caractérisé**
en ce la couche sensible (2) est générée avec un procédé de couche mince ou avec un procédé de couche épaisse.
